# EUROPEAN PATENT APPLICATION

(11) **EP 2 993 866 A1**
(43) Date of publication of application: **09.03.2016**
(21) Application number: 14290267.5
(22) Date of filing: 08.09.2014
(51) Int. Cl.: H04L 29/08

(54) **Method for distribution of service requests**

(71) Applicant: ALCATEL LUCENT, 92100 Boulogne-Billancourt (FR)
(72) Inventor: Klotsche, Ralf, 70435 Stuttgart (DE); Sienel, Jürgen, 70435 Stuttgart (DE)
(74) Representative: Louis Pöhlau Lohrentz

(57) **Abstract**

The invention concerns a method for distribution of service requests (1) to a plurality of servers (2). The method comprises receiving (3), in particular by a front end distributor (14) a service request (1), retrieving out of the service request (1) data relevant for selecting out of the one or more servers (2) a server (2), where a state of the service is already local, selecting the server (2) based on the data retrieved out of the service request (1) and sending (10) the service request (1) to the selected server (2). The invention concerns further a front end distributor (14) used for distribution of service requests (1) and a system (15) comprising a plurality of servers (2) and a front end distributor (14) for processing service requests (1).

## Description

### Field of the invention

The invention is situated in the field of information processing and telecommunication appliances which are implemented by a plurality of servers including virtual servers in a cloud environment. The invention deals with a method and apparatus for distributing service requests to one or more of the servers, in particular to one of the servers that is able to process the request.

### Background

Network Function Virtualization (NFV) provides means for deploying current telecommunication appliances as virtualized services in a cloud environment. A cloud environment is a network comprising processing and/or storage resources which are implemented by one or more, usually a plurality, of virtual servers which are distributed on one or more, usually a plurality of physical servers. This cloud environment relies on common virtualization technologies which enable to run multitude of the same or different services on the physical infrastructure. Thus services are dynamically assigned during runtime to one of the servers offering options for dynamic scaling up and down the resources for a given service dependent on the actual work-load. This is very different from actual physical resources where the number of resources and accordingly the number of service instances is pre-defined long before the physical deployment. This planning considers estimated workload patterns and defines load-balancing strategies based often on an estimated maximum work-load. In cloud deployments a more dynamic resource allocation is possible as the number of service instances may grow and shrink in very short time periods following the actual access patterns instead of the maximum considered workload.

Load balancing is achieved by selecting one of the service instances (namely instances on servers, preferably called workers) to which the service request is sent for further processing. If this processing is dependent on information that is not part of the service request, load balancing becomes more difficult. Then the load balancer must "know" the server that has access to state information, because it is locally stored at the server (stateful server). Alternatively, the state is stored in an external state repository (e.g. memcached distributed database) and can be retrieved by an instance that receives the request (stateless worker model). This approach is typically much more flexible in a dynamic environment where the number of service instances may change over time. One drawback of the stateless worker model is that it needs to retrieve the actual state from another node implying additional delay in the execution of the service.

Therefore, cloud services follow typically the 'stateless worker model' which offers high performance and efficient resource usage e.g. for Web-like applications.

Today's load balancing mechanisms distribute the request randomly, or select from one of the servers following a round robin algorithm. Improved scheduling schemes may be used considering weights for each instance reflecting resource capabilities. As such principles of stateless frontend distribution do not consider the location of the state, the servers handling the request need to retrieve the state from the state repository. In case of a distributed database used for the state repository collocated with processing instances, the chance of finding the state in the local cache is affected by the number of service instances and the database's replication factor. If many worker instances n exists and the replication factor r of the state DB is low, the probability is r/n that the request is routed to a server where the state is local.

Another alternative is to fully parse the request and to select the server based on the information found in the message. Unfortunately this processing is typically very heavy weight for complex protocols like SIP and will result in that the number of request to be processed by the FED is not much higher than the capacity of the workers. Thus each FED can only serve very few workers limiting the scalability of the system.

Load balancing of end-user request could be done very effectively using packet processors. Here the combination of source and target IP address and the ports used often uniquely identify the stream and the corresponding worker instance so that all requests belonging to the same stream may be routed to the same worker instance. This is not possible in many cases for NFV services, because here a set of workers from one Network element using shared links communicate with the FED of the next element so that the different streams could not be identified without deeper analysis of the requests.

### Summary of the invention

The objective of the invention is to provide an improved mechanism for distributing service requests to a server which is appropriate to process the request.

The objective of the invention is achieved by a method for distribution of service requests to a plurality of servers. The method comprises receiving a service request, retrieving out of the service request data relevant for selecting out of the one or more servers a server, where the state of the service is already local, selecting the server based on the data retrieved out of the service request and sending the service request to the selected server.

The objective of the invention is further achieved by a front end distributor used for distribution of service requests to a plurality of servers. The front end distributor is adapted to receive a service request, to retrieve out of the service request data relevant for selecting a server, where the state of the service is already local, to select the server based on the data retrieved out of the service request and to send the service request to the selected server.

The objective of the invention is further achieved by a system for processing service requests. The system comprises a plurality of servers and a front end distributor, wherein one or more of the servers locally store one or more chunks, wherein each chunk comprises state information for a group of users and/or sessions. One or more of the servers of the plurality of servers are adapted to receive a service request from the front end distributor and to execute the service request by means of the locally stored chunk information.

The objective of the invention is further achieved by a software product adapted to execute the method according to claims 1 to 12, when executed on a computer.

State information or for short state might be understood as the information that is needed at a point of operation to process a request or to process a multitude (or plurality) of requests which are related to each other in a consistent way. A state is considered local, if the request can be processed without requesting data from an external entity (e.g., database, server).

In case the service is a telephony session controller, a state might be that a telephone call request came in from a sender to a coupling entity. For processing the service request, the coupling entity needs to know the connectivity status of the sender and of the receiver or in other words the coupling entity needs the (current) state information of the service. The coupling entity might be a server. The processing of the request may lead to an output e.g. an eventually modified request sent to the receiver or another server and an update of the state information.

In preferred embodiments, a service request corresponds to a message (text or binary) that is interpretable by the service running on said server. Based on the message and the actual state of the service, the service request is processed and possibly a second message is send, and possibly the state of the service is updated.

Preferably, a service request is defined as a message for which state information must be known to process the message, where the state information is here the information of the current state of the service. Preferably, a service request is a message the processing of which changes the state of the respective service, in other words a service request is a message which changes the state of the service when the message is processed.

Preferably, the term "service request" throughout this application is not to be understood only as the beginning of a transaction, but comprises every message during a transaction, when for processing of the message the state of the service must be known and/or the processing of the message changes the state of the service. For example, each of the messages related to the steps of: request for a call, trying to establish a call, confirm establishing of a call etc. is a service request in the sense of the present application.

The objective of the front end distributor is upon reception of a service request to select the server that is best suited to process the service request in a way to distribute the processing of the service request to all servers in a balanced way and second to avoid the receiving server to retrieve the actual state information from an external server or database. In other words select the server with free processing capacity which has the required state locally available.

This is achieved by retrieving out of the service request data relevant for selecting a server. The data retrieved out of the service request are regarded as relevant, if based on the data a server can be selected (in the next step) which is supposed to know the state of the service. The data are relevant for selecting a server, because the data comprise information which is useful for a selection of a server, while it is not completely sure, if the server which is selected based on the data has actually the state information.

The invention might be implemented by hardware, software or combination thereof.

Further features and advantages of the invention are achieved by preferred embodiments.

The preferred embodiments are not construed to be limitative, but to be combinable thereby forming further preferred embodiments, nor to be restrictive, but the scope of the invention is defined by the claims.

In a preferred embodiment, the service request is received by a front end distributor (FED).

In a preferred embodiment, the step of retrieving out of the service request data relevant for selecting the server comprises one or more of: extracting out of the service request predetermined features, categorizing the extracted features and filtering the categorized features.

In a preferred embodiment, after extracting the predetermined features out of the service request, the predetermined features are converted into keys. A key is a certain kind of information which is comprised in the service request and can be uniquely mapped to the server that is selected in the further step. This means, predetermined features are those features, which can be converted into keys. Therefore, predetermined features are extracted out of the service request.

In telecommunication service using e.g. SIP (SIP = Session Initiation Protocol) as session control protocol predetermined features might be the data out of the "from / to"-fields. Predetermined features might be the data out of the "PrivateID" field in a service request coming from a HSS (HSS = Home Subscriber Server).

In preferred embodiments, after extracting the features, the features are categorized and filtered.

In a preferred embodiment, the features are extracted by means of key-word matching.

In a preferred embodiment, in the context of SIP-protocol, features are extracted by means of bi- or trigrams.

In a preferred embodiment, the features are extracted by matching with bloom-filters.

In a preferred embodiment, the features are extracted by hidden markoy models.

In a preferred embodiment, the features are extracted by neural networks.

In a preferred embodiment, the step of selecting the server comprises one or more of: determining one or more hash values out of the filtered features, mapping one or more of the one or more determined hash values to a chunk and determining an address of the server based on said chunk.

Preferably, a chunk in this context is meant as a set of objects and/or a set of keys representing said objects, wherein the objects are hosted on the same server. Bundling the objects or keys representing the objects to chunks offers the advantage that the lookup operation to locate the server that should process a request involving an object in a chunk can be kept easy and therefore efficient and fast. In a preferred embodiment, such a lookup operation can be implemented by an address table operation. In other words, in preferred embodiments, a chunk is or corresponds to a set of keys, each key representing an independent state object. The bundling of the keys is based on a mapping function that allows a separation of the chunks by a simple operation (e.g. comparison). Thus, the location of the chunk can be retrieved by a simple look-up operation.

In a preferred embodiment, one or more chunks are stored at the one or more servers, wherein each chunk comprises state information for a group of independent entities in the context of above communication service, this might be users of the communication service.

In particular, in a chunk, the state information is stored which is needed to process one or more service requests which change a given state. This means the state information of the state which is changed when processing one or more service requests (e.g. of a group of users or sessions) is stored in a particular chunk.

A chunk might be defined as a data block. A chunk is preferably a space of data storage resources or a portion of data storage resources.

In a preferred embodiment, the method of translating the hash values into a chunk corresponds to a unique segmentation of the possible value space into independent non-overlapping areas.

In a preferred embodiment, the value space corresponds to an integer range between 0 and MAX_INT and the segmentation corresponds to a modulo-n operation with n much smaller than MAX_INT.

In another preferred embodiment, a chunk is determined by a calculation from hash values which translate key information into indices to tables.

For example, a chunk begins at a hash value # X and ends at a hash value # X + 2^{y}. Preferably, a chunk is determined by a hash space, e.g. beginning at hash value # X and ending at hash value # X + 2^{y}. The end of the chunk is indicated for exemplary reasons by the hash value # X + 2^{y}. This is done in particular, because in preferred embodiments, as will described later in detail, a chunk is split into two parts, in particular the chunk is divided by two into two halves. Because of the end address # X + 2^{y} the hash space between the first address # X and the end address # X + 2^{y} can easily divided into two halves.

In preferred embodiments, the processing of the invention might be summarized as follows. The objective is to find a server where the state of a service request is already local, in particular with a high probability. This respective state of the service is stored at a server within a chunk (or represented by a chunk of keys). Usually, a multitude (or plurality) of states of a service needed for processing the service requests of a group of users or for a group of sessions is stored on each server, more particularly within chunks, which are datablocks, wherein each chunk comprising state information for a group of users or sessions corresponding to respective service requests. Each chunk is addressed by a hash value, such as # X, which corresponds to the beginning of the chunk. Therefore, the chunk of the server where the state of a service request is stored and therefore the server itself is found by determining the hash value out of the received service request and then looking for the chunk's hash value which corresponds to the hash value determined out of the service request. By the hash value of a chunk, the chunks' address (in particular, more precisely the address(es) of one or more servers processing service requests belonging to a given chunk) can be found. If service requests are received, out of the service request hash values are determined. Having determined the hash value out of a particular service request, the chunk can be determined having the same hash value within the chunks hash room. In other words, once the hash value out of a service request is determined, it is looked for the chunk covering the range of hash values (e.g. beginning and ending of the chunk determined by the hash values). This looking for the chunk might be implemented by mapping the hash values determined out of received service requests to the (same) hash values of the chunk, because in the chunk which is determined by the same hash values like the hash values determined out of the received service requests, the state information for said service requests is stored, this means at the server where the chunk is stored. The mapping might be implemented by a mapping table. The mapping table comprises e.g. the hash values, the corresponding chunks, the server where the chunks are stored, the address of the chunks and the address of the server. Preferably, out of one service request one hash value is determined and the chunk is determined of which the hash room covers the hash value for said service request. Preferably, the hash values determined out of a plurality of service requests which need the same state information are hash values which are covered by the same chunk where the state information needed is stored. Preferably, the hash values determined out of service requests which need the same state information are same hash values or in other words the same hash value.

Preferably, a feature vector corresponds to data comprised in a service request, which are appropriate to be used to identify those service requests which change the same state and to differentiate those services requests from other service requests which change another state. Preferably, a key is used to identify unambiguously a particular state. Preferably, a chunk is a group of keys which are grouped together by a simple operation, in particular a comparison (e.g. the keys corresponding to a group of users or sessions). Preferably, a chunk is unambiguously defined or determined by the beginning of said chunk and thereby in particular implicitly e.g. by offset operation by the ending of the chunk. Preferably, a chunk is determined by the hash space (or hash room) of the chunk, e.g. by the beginning of its hash space and the ending of its hash space, wherein the beginning is preferably indicated explicitly and wherein the ending might be indicated explicitly or implicitly, e.g. by an off-set.

Preferably, only the hash value that matches the beginning of the chunk is stored in a table. By this, the table can be shortened by one dimension and to a fraction of its length. The chunk-range is naturally given by the interval 'chunk-begin-hash' .. 'next-chunk-begin-hash' -1. There is a trade-of between speed (1^{st}) and table space (2^{nd}). 1^{st} works via one step indexing, 2^{nd} by searching to the last hash smaller than the 'search-hash'

Preferably, a chunk is determined by a hash room which is smaller than a hash room which would be generated by a full table of all addresses on the server(s) where the state information is stored. In other words, by means of providing a plurality of chunks the hash room which indicates a certain number of addresses on the server(s) is kept smaller as if for every and each address a separate key in a hash room were stored.

In a preferred embodiment, the used hash table is smaller than the chunk which comprises the state information addressed by said hash table. Preferably, this is done by using methods such as off-sets to keep the hash table smaller. This means only the beginning of a chunk's hash space is indicated by a key entry in the table and the hash room of the chunk is addressed by the key indicating the beginning of the hash room and an offset value.

In a preferred embodiment, out of the filtered features hash values are determined, in particular and more precisely one hash value per service request. In preferred embodiments, all service requests requiring access to the same state object have the same hash value. In preferred embodiments, all service requests requiring access to the same state object or in other words to the same chunk where said state object (and corresponding same state information is stored) have the same hash value. In preferred embodiments, all service requests requiring access to the same state object or in other words to the same state information have hash values which are mapped to the same chunk, namely the chunk were the same state information is stored. Service requests requiring access to a state object means in particular that the service requests need the state information corresponding to said state object for processing of the service request. Thus requiring access the state information means need the state information.

Preferably, the state information is stored within the chunks by state objects, wherein a state object stores the state information needed for processing service requests which need said state information to be processed and/or which change the state of the processed service, which leads to an update of the state information and thus to the information stored in the respective state object.

Preferably, for each state object, where a particular state information is stored, one hash value is determined to process the service requests which need the state information stored in staid state object. For example, the SIP messages which need the same state information will be processed into the same hash value, because this one hash value leads to the same state object where the state information is stored related to the state which is processed by the SIP message. E.g. in case of a SIP INVite from RALF to JUERGEN seq= 24 the same state object is addressed (and therefore the same state information) as the SIP 200OK message from JUERGEN to RALF seq=25, because these messages need and/or change the same state, thus out of these messages the same hash value is retrieved leading to the same state object.

In particular, the filtered features are hashed to determine one or more hash values (or hashes), in particular one hash value for processing one service request. In a preferred embodiment, the filtered features are keys and the hashing of the keys results to one or more hash values, in particular one hash value for one service request. Thus, in a preferred embodiment, one or more hash values are determined out of the one or more keys, in particular one hash value for one service request.

In a preferred embodiment, the service requests which need the same state information for processing the service request are processed into the same hash-value. In particular, the hash value derived out of the service requests which need the same state information leads to the chunk where the state information is stored. In preferred embodiments, a hash value corresponds to a state object where the state information is stored needed for processing the service request. In further preferred embodiments, a hash value is determined which is not exactly correct (because of a certain uncertainty of the methods of retrieving data and processing the hash values as described in the description), but nevertheless corresponds to the chunk where the state information is stored correctly. In this later case, the server to which the service request is sent might determine the correct state object (or state information) needed to the process the service request(s). In either case, the hash value is appropriate, because it leads to the correct server, namely the server where the state information is stored needed to process the state information. In this case, one main objective of the invention is also achieved, namely determining the appropriate server for processing service request(s), namely the server where the state information needed for processing the service request(s) is stored.

In a preferred embodiment, out of the filtered features one hash value is determined for processing one service request. The features are filtered and the result of filtering the features is a key, which is hashed into a hash value.

In a preferred embodiment, one or more of the one or more determined hash values are mapped to a chunk. A chunk might be understood as a data block comprising state information of one or more users, in particular of a group of users. A chunk might be understood as a data block comprising state information of one or more sessions, in particular of a group of sessions.

In a preferred embodiment, based on a chunk an address of a server is determined. Each server of the plurality of servers has stored locally one or more chunks. Preferably, by determining a chunk, the server where the chunk is stored can be determined. Preferably, an address is an IP-address. In particular, preferably an address of a server is an IP-address of a server. Preferably, an address of a chunk is an address of a storage within a server or the address within the storage resource, where the chunk is stored. This means, preferably, the address of a chunk indicates where the chunk is stored within a server. Preferably, the address of a chunk is a storage address. Preferably, the address of a chunk is a memory address. Preferably, virtual addresses are used. Preferably, an address is a virtual address. Preferably, an address of a chunk is a virtual address. Preferably, an address of a server is a virtual address. Preferably, an address of a chunk is indicated by a hash value. Preferably, a chunk is determined by a hash room. Preferably, a hash room of a chunk is indicated by the hash value determining the beginning of the hash room and, preferably, a hash value determining the ending of the hash room of the chunk. Preferably, the hash value(s) indicating the hash room of a chunk (in particular the hash value indicating the beginning and, preferably, the hash value indicating the ending of the hash room of the chunk) are correlated or mapped to the memory address of the chunk (e.g. by a mapping table). Preferably, the memory address of a chunk is determined by the hash value indicating the beginning, and preferably the hash value indicating the ending, of the hash room of a chunk. In preferred embodiments, a hash room of a chunk is determined by the hash value indicating the beginning of the hash room of the chunk and an offset. In preferred embodiments, the offset indicates the ending of the hash room of said chunk. In other preferred embodiments, the offset indicates the beginning of the hash room of another chunk.

In a preferred embodiment, retrieving out of the service request data relevant for selecting a server, where the state of the service is already local, and selecting the server based on the data retrieved out of the service request comprises determining a feature vector; and processing out of the feature vector using support vector machines a solution vector from which the the address of the server can be derived.

In a preferred embodiment, retrieving out of the service request data relevant for selecting a server, where a state of the service is already local, comprises: determining a feature vector; and processing out of the feature vector using support vector machines a solution vector from which the address of the server can be derived. Preferably, the vector is implicit when using support vector machines. Preferably, as support vector machines are a method of self-learning machines, no administration for filters is needed.

In a preferred embodiment, retrieving out of the service request data relevant for selecting a server, where a state of the service is already local, comprises determining a feature vector, and the step of selecting the server based on the data retrieved out of the service request comprises processing out of the feature vector using support vector machines a solution vector from which the address of the server can be derived.

Support vector machines refer to a classification method which allows do determine from a feature space (e.g. represented as a vector field) separable sets belonging to the same class and represent them using a lower dimensional description.

In a preferred embodiment, retrieving out of the service request data relevant for selecting the server comprises scanning the service request by tree based self learning techniques.

Tree based self learning techniques comprise extracting n-grams, analyzing the typical occurence of the sequence in specific request types and extracting the uniquely identifyable item as features for the feature vector.

In a preferred embodiment, retrieving out of the service request data relevant for selecting the server comprises determining a protocol used for the request; and parsing the request based on a knowledge of the used protocol, this means the protocol which is used must be known to parse the request. Preferably, parsing the request based on a knowledge of the used protocol comprises identifying key-words and the variable protocol fields represented e.g. as key-value pairs. In contrast to the above described embodiments, which do not make assumption per se on the used protocol, in this embodiment, it must be known how a syntactically correct message must look like. For example, a key-word in this embodiment is the name of a variable, and the variable is the value. For example, in a SIP message the key words may the SIP message type (REGISTER, INVITE, BYE), specific fields in the SIP message (to, from ,cseq, ...) independent of their location, and the values are the contents of the field (to: "alice@example.com, from: bob@example.com).

In a preferred embodiment, the step of selecting the server based on the data retrieved out of the service request comprises selecting, based on the data retrieved out of the service request, the server, where the state is already local with a high probability.

In a preferred embodiment, the step of selecting the server based on the data retrieved out of the service request comprises selecting, based on the data retrieved out of the service request, the server, where the state is already local, with a high probability.

In a preferred embodiment, the step of selecting the server comprises executing based on one or more of the retrieved data a probability calculation to determine one or more of the servers where the state is already local with a high probability and selecting the server based on said probability calculation.

In a preferred embodiment, based on the one or more retrieved data a probability calculation is executed.

Preferably, the term probability can also be referred to as accuracy. If the accuracy of determining the appropriate server (where the state is local) rises, the probability rises that the selected server has stored the state locally. The state is here the state needed to process a respective service request.

In a preferred embodiment, based on the probability calculation one or more servers, where the state is already local with a high probability, are determined.

In a preferred embodiment, a server, where the state is already local with a high probability, is selected.

In a preferred embodiment, the probability calculation to determine one or more of the servers where the state is already local with a high probability and selecting the server based on said probability calculation is implemented by support vector machines techniques. In a preferred embodiment the state determining features inherent in e.g. a SIP request are extracted and machine learning like support vector machines is chosen to map the request to a feature vector. This vector may collapse in one processing step as solution vector and may point to a region where the address of a server is assigned directly.

In this embodiment, the solution vector points to a region where the address of a server is assigned directly with a high probability. In other words, by means of the support vector machines a server is determined, where the state is already local with a high probability.

In a preferred embodiment, based on the probability calculation, two or more servers are determined where the state of the service is already local with a high probability and the server is selected where the state of the service is already local with the highest probability.

In preferred embodiments, the appropriate server (the server which has stored the needed state information) is selected (only) with a certain, preferably high, probability, because in the described methods of retrieving data relevant for selecting the server and selecting the server based on the retrieved data a certain uncertainty is implicit. As the service request should and is not analyzed in every detail, but by means of the described method, there is a small risk that the appropriate server is not selected, or that a server is selected which is not appropriate because it does not have the requested state information. However, the more distinguishing features are used by these methods, the higher is the probability that the appropriate server is selected. There is a trade-off between efficiency and processing resources in choosing the right way how many distinguishing features are used to select the appropriate server. In general, the more distinguishing the features are and/or the more distinguishing features are processed, the higher the probability is to select the appropriate server.

Preferably, the probability calculation is processed by the steps of retrieving out of the service request data relevant for selecting the server and selecting the server (or servers if more than one server has stored the same state information needed). In other words, the probability calculation is implemented as one of the methods of retrieving data and selecting a server (or servers see above). In other words, usually there is no additional (or separate) probability calculation, but the probability calculation is a generic term comprising the steps of a particular method for retrieving data and selecting a server (or servers), because by these steps the appropriate server(s) is (are) selected only with a certain probability.

In a preferred embodiment, based on the probability calculation, two or more servers are determined where the state of the service is already local with a high probability and the request is attributed to one or more servers of the two or more servers based on load balancing, in particular to distribute the load of the service requests equally between the servers.

In a preferred embodiment, a chunk, which comprises state information for a particular group of users, is attributed to a particular server. In other words, said particular server has locally stored said chunk.

However, in a preferred embodiment, a chunk is attributed to more than one server. In other words, more than one server, e.g. two servers, have locally stored said chunk. Said chunk is stored at a first server and said chunk is stored redundantly at a second server.

In a preferred embodiment, one or more of the chunks are replicated from a first server to at least one second server of the plurality of servers.

In a preferred embodiment, one or more of the chunks are re-allocated from a first server to a second server of the plurality of servers.

In a preferred embodiment, one or more of the chunks have been stored at the first server before being re-allocated and are stored at the second server after being re-allocated.

In preferred embodiments, the term "server" refers to a physical server and selecting a server out of one or more servers is to be understood as selecting a physical server out of one or more physical servers.

In preferred embodiments, the term "server" refers to a virtual server and selecting a server out of one or more servers is to be understood as selecting a virtual server out of one or more virtual servers. One or more virtual servers might be implemented by one or more physical servers, in particular one virtual server might be implemented by one or more physical servers and/or a plurality of virtual servers might be implemented by one physical server or by a plurality of physical servers.

Preferably, the term "server" refers to a virtual server and selecting a server means selecting a virtual server from a plurality of virtual servers.

In a preferred embodiment, if one of the one or more chunks has become too big, a part of said chunk is split from said chunk, and said part is stored as a new chunk at a server different from the server where the chunk, that has become too big before being split, is stored.

In a preferred embodiment, one of the one or more chunks stored at a particular server, if said chunk becomes too big, is split in a first portion of said chunk stored at said particular server and in a second portion of said chunk stored at said particular server, where the first portion becomes a first new chunk and the second portion becomes a second new chunk.

In a preferred embodiment, one or more chunks of said chunks, which are stored at a first server of the plurality of servers, are stored redundantly at one or more second servers different from said first server.

In a preferred embodiment, if the selected server fails, a reserve address for a redundant server is determined and the request is sent to the redundant server.

### Brief description of the figures:

The advantages and features of the invention will be more completely understood based on the following detailed description with reference to the figures of which
- Fig. 1: depicts a block diagram showing on overview of a system and method for distribution of service requests
- Fig. 2: depicts a block diagram showing on overview of preferred embodiments of a method for distribution of service requests
- Fig. 3: depicts schematically steps and elements used in preferred embodiments of a method for distribution of service requests
- Fig. 4: depicts schematically steps and elements used in further preferred embodiments of a method for distribution of service requests
- Fig. 5: depicts schematically an example of storing chunks at one or more servers
- Fig. 6: depicts schematically a further example of storing chunks at one or more servers
- Fig. 7: depicts schematically yet a further example of storing chunks at one or more servers
- Fig. 8: depicts a block diagram of a system used to implement a method for distribution of service requests

### Detailed description:

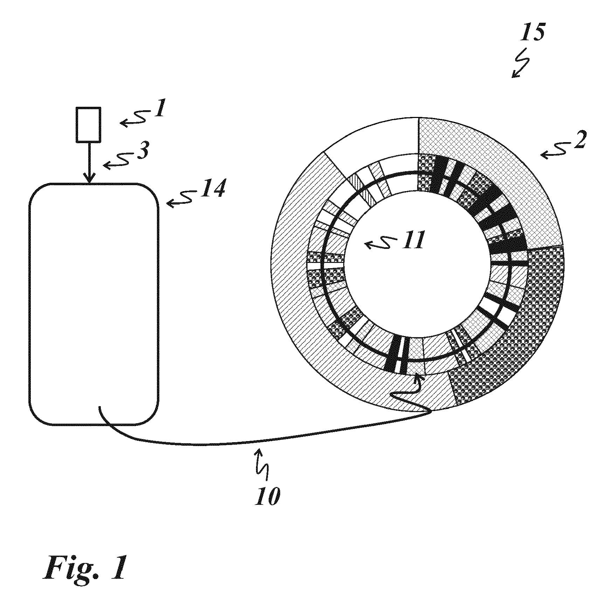

Figure 1 depicts an overview of a method and system 15 for distribution of service requests. Figure 1 shows a front end distributor 14 on the left side and a plurality of servers 2 on the right side. The plurality of servers 2 forms an outer ring in the schematic picture on the right side of figure 1. A plurality of chunks 11 is allocated to the plurality of servers 2. The plurality of chunks 11 forms an inner ring in the schematic picture on the right side of figure 1. A service request 1 is received by the front end distributor 14. The front end distributor 14 processes the service request 1 in order to select a server 2 and sends 10 the service request 1 to the selected server 2. The method and system 15 will now be described in more detail.

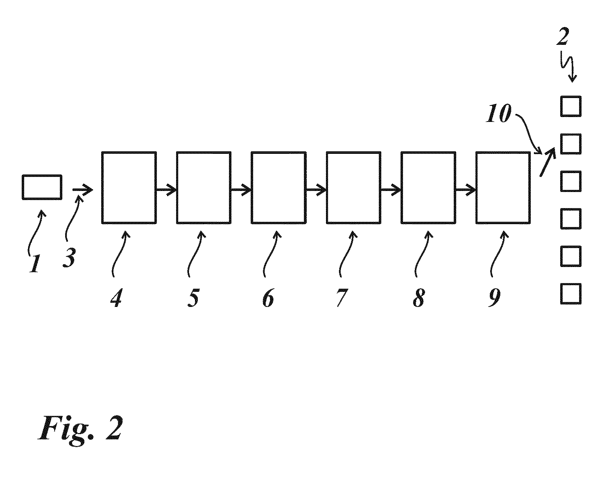

Figure 2 depicts an abstract generic processing chain of preferred embodiments of a method for distribution of service request 1. A service request 1 is received 3 at the beginning of the processing on the left side of the processing chain. The processing chain will end by sending 10 the service request 1 to one of the servers 2 on the right side of the processing chain.1. The processing chain comprises retrieving out of the service request 1 data relevant for selecting out of the one or more servers 2 a server 2, where a state of the service is already local, selecting the server 2 based on the data retrieved out of the service request 1 and sending 10 the service request 1 to the selected server 2.

The step of retrieving out of the service request 1 data relevant for selecting the server 2 comprises extracting 4 out of the service request 1 predetermined features, categorizing 5 the extracted features, filtering 6 the categorized features and determining 7 hash values of the filtered features, in particular hashing the filtered features.

According to the implemented embodiment, one or more of the steps of retrieving out of the service request 1 data relevant for selecting a server 2 and of selecting a server 2 might be omitted or processed in a different order.

In a preferred embodiment, retrieving out of the service request 1 data relevant for selecting a server 2, where a state of the service is already local, comprises determining a feature vector and processing out of the feature vector using support vector machines a solution vector from which the address of the server 2 can be derived.

In a preferred embodiment, the service request 1 is a SIP message (SIP = Session Initiation Protocol). In a preferred embodiment, the SIP message is a SIP request. In another preferred embodiment, the SIP message is a SIP response, whereas the SIP server is a coupling entity. In either case, the SIP message, whether being a SIP request or a SIP response, is referred herein as a service request 1. In other words, a SIP request is a service request 1 in the sense of the present application and also a SIP response is a service request 1 in the sense of the present application. In a preferred embodiment the state determining features inherent in the service request 1 are extracted and a machine learning technique like support vector machines is chosen to map the service request 1 to a feature vector. This vector may collapse in one processing step as solution vector and may point to a region where the address of a server 2 is assigned directly.

In a preferred embodiment, the step of selecting the server 2 comprises executing based on one or more of the retrieved data a probability calculation to determine one or more of the servers 2 where the state is already local with a high probability and selecting the server 2 based on said probability calculation.

In a preferred embodiment, the probability calculation is implemented by steps of machine learning techniques, e.g. support vector machines.

In a preferred embodiment, the solution vector, calculated out of the feature vector in the support vector machine embodiment, determines a server 2 where the state is already local with a high probability.

In a preferred embodiment, retrieving out of the service request 1 data relevant for selecting the server 2 comprises scanning the service request 1 by tree based self learning techniques.

In a preferred embodiment, tree based self learning may deliver a decision tree for analyzing those protocol elements of e.g. a SIP request which can be traversed to identify the most disambiguating data and derive a hash value for the state entity (i.e. a server 2 which stores the chunk 11 comprising the respective state information) that needs to be addressed. The hash then represents a group of identifiers (e.g. users or sessions) and each group is assigned to a server 2.

In a preferred embodiment, the tree comprises all discriminative features. In case the tree comprises all discriminative features, the server 2, where the state information is locally stored which is needed to process the service request 1, will be determined surely or definitely, this means with a probability of 100 percent. However, usually, in favour of enhancing the efficiency of the processing, the tree comprises only those features which are the most discriminative features. Therefore, the server 2, where the state information is locally stored which is needed to process the service request 1, will be determined only with a probability lower than 100 percent, however preferably, with a high probability, e.g. 70 percent, 80 percent or 90 percent or any other percent value lower than 100 percent, but preferably higher than 60 percent.

When parsing the service request 1, the features extracted out of the service request 1 are compared with the features of the tree. In case, features extracted out of the service request 1 correspond to respective features of the tree, a decision is made for selecting a branch of the tree. This is repeated until a hash value is derived out of the tree, wherein the hash value indicates a server 2 which has stored the state information with a certain probability as specified above.

In a preferred embodiment, retrieving out of the service request 1 data relevant for selecting the server 2 comprises determining a protocol used for the service request 1 and parsing the service request 1 based on a knowledge of the used protocol. In this case some knowledge of the protocol used is implemented (e.g. in SIP parsing for the 'from, to, callID' fields) and the information-entropy is reduced to perform the final hashing 7, mapping 8 and addressing 9.

Analogously to what has been described in context of the tree based self learning techniques, also in case of parsing the service request 1 based on a knowledge of the used protocol, the more discriminative the features are, the higher is the probability that the server is selected which has the needed state information stored locally.

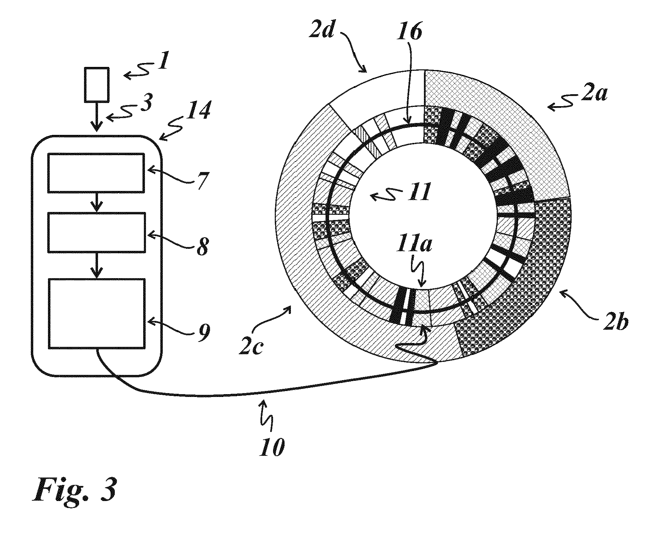

Figure 3 shows an example embodiment of a method for distributing service requests. On the left side, a service request 1 is received 3. The service request 1 is in this example received 3 by a Front End Distributor (FED) 14. Exemplary main processing steps are depicted within the FED which implements said processing steps.

The FED 14 receives a service request 1 and wants to determine the server 2, where the state information of the service request 1 is stored. The servers 2 have stored chunks 11 comprising state information, wherein each chunk 11 comprises state information for a group of users, i.e. for service requests 1 of a group of users. The servers 2 in this example are three servers 2a, 2b, 2c and 2d. The servers 2, this means here the three servers 2a, 2b, 2c and 2d form an outer ring. Corresponding to the outer ring, this means within the outer ring, an inner ring is depicted. The inner ring is formed or comprises the chunks 11 which are stored at the servers 2a, 2b, 2c and 2d. The inner ring comprises a plurality of chunks 11 (differentiated by different grey and white tones). The server 2a has stored a first portion of the chunks 11, the server 2b has stored a second portion of the chunks 11, the server 2c has stored a third portion of the chunks 11 and the server 2d has stored a forth portion of the chunks 11. For example, a particular chunk 11a is stored at server 2c. Each chunk 11 is determined by hash values indicating the address of the respective chunk 11. The hash values indicating the beginning and the ending of a chunk 11 might be termed hash space. Thus, a chunk 11 is determined by a hash space (comprising in particular the hash value indicating the first address of the chunk at the storage of the server 2 and the hash value indicating the last address of the chunk at the storage of the server). Therefore, the hash values indicating the addresses of the chunks 11 stored at servers 2a, 2b, 2c and 2d form a ring 16 of hash spaces. For example, a chunk 11a has a hash space beginning at the hash value #2 and ending at hash value #2 + 2^{y}. (For illustrative reasons, the ending hash value is indicated by #2 + 2^{y}, so that the hash space can easily be devided into two halves what is done in preferred embodiments described later.) As the hash values of the chunks 11 which are stored at servers 2a, 2b, 2c and 2d correspond to the storage capacities of the servers 2a, 2b, 2c, 2d, the hash values of all chunks 11 form a ring 16 of hash spaces corresponding to the chunks 11 stored at the servers 2a, 2b, 2c, 2d. In this embodiment, the servers 2a, 2b and 2c and 2d are used to implement an S-CSCF (Service Call Session Control Function).

In other embodiments, the servers 2a, 2b, 2c and 2d might be used to implement a S-CSCF, Service Call Session Control Function, or in further embodiments, an I-CSCF, Identification Call Session Control Function.

In a preferred embodiment, the FED is implemented by the P-CSCF function.

In a preferred embodiment, the FED is implemented by any of (in particular one or more of) the functions of the IMS (IMS = IP Multimedia Subsystem, IP = Internet Protocol, e.g. P-CSCF, S-CSCF, I-CSCF etc. In a preferred embodiment, each of the functions of the IMS implements a FED.

Preferably, the FED might implement the functions of the P-CSCF (Proxy Call Session Control Function.

In a preferred embodiment, the FED is a separate element independent from the P-/I-/S-Server and independent from further elements, in particular IMS or SIP elements and IMS or SIP processing, respectively.

In other embodiments, the servers 2a, 2b, 2c, 2d might implement any other function for processing the service request 1, in particular any other function for which the state of the service must be known for processing of the service request.

The idea of the invention is to select the server 2a, 2b, 2c or 2d which stores the state information of the service request 1 to be processed. In other terms, each server 2a, 2b, 2c, 2d is a resource of workers which are instances to process the service request 1 received by the P-CSCF and sent to the S-CSCF for further processing and it is the idea to select the appropriate worker to process the service request 1. The appropriate worker or worker instance is implemented by the server 2a, 2b, 2c, or 2d which already stores the state of the service request 1, in other words where the state of the service request 1 is located. To this server 2a, 2b, 2c or 2d is sent the service request 1 from the P-CSCF because this selected server 2a, 2b, 2c or 2d is used to implement the functions of the S-CSCF by its worker (instance).

In other words, a worker or worker instance is an abstraction of the functions implemented by e.g. each of the P-CSCF, S-CSCF or I-CSCF etc. function. When a service request is processed within a IMS structure comprising e.g. the P-CSCF, S-CSCF, I-CSCF and further functions, which might be implemented as virtual worker instances within the same physical server or distributed over a plurality virtual or physical servers, the service request is processed e.g. by the P-CSCF function, by the S-CSCF function and by the I-CSCF function and is therefore sent from one of these functions to another of these functions. Each of these functions is implemented as at least one worker or worker instance which is located at a server which might and usually will be a virtual server, and the worker instance is a virtual instance. Each of the P-CSCF, S-CSCF and I-CSCF function might be implemented by a plurality of (virtual) servers and respectively by a plurality of virtual worker instances. According to described method, to implement for example the functions of the S-CSCF function, one particular server is selected out of the servers which are used to implement the S-CSCF function, namely the server is selected which has already stored the state information for a particular service request which is received by the P-CSCF function and then sent for further processing to the S-CSCF, namely to said selected server having already stored the state information for said particular service request.

In figure 3, exemplary steps are depicted as implemented by the FED 14. The FED 14 receives 3 a service request 1 and for selecting a server 2 the FED 14 implements in particular the step of determining 7 one or more hash values out of the filtered features. (The step of retrieving out of the service request 1 data relevant for selecting the server are not depicted in detail in figure 3, but are preferably also implemented by the FED according to the chosen method (e.g. support vector machines, tree based self learning techniques, parsing the service request 1 based on some knowledge of the used protocol). Here out of the filtered features, keys are retrieved. Therefore, here the step comprises determining a key and the corresponding hash value out of the key. Then the determined hash value is mapped 8 to a chunk 11, in other words the chunk 11 is identified to which this hash belongs. Then the address of the server 2 is determined based on said chunk 11, this means the address of the server 2 which has stored said chunk 11.

In preferred embodiments, the FED 14 receives a service request 1 and retrieves data relevant for selecting a server 2, where the state of the service request 1 is already local. The data relevant for selecting a server 2 are keys, such as e.g. values out of the "from/to" fields in a SIP service request 1. Here, for example the service request 1 is a SIP service request 1. The FED implements here the steps of parsing the service request 1 for retrieving the key this means the values out of the "from/to" fields in SIP service request 1. These steps have been described above and are not further depicted here, while actually being implemented. Figure 3 shows in more detail the steps which are implemented after the keys have been already retrieved out of the service request 1. The keys are the filtered features retrieved out of the service request 1. In step 7, the keys are hashed to determine hash values out of the keys. In step 8, based on the hash values retrieved from the keys (filtered features), it is looked for the chunk 11 in which the state information corresponding to the received service request 1 is stored. This step might be determined mapping a hash to a chunk 11. In other words, e.g. in a look-up or mapping table, it is looked for the chunks having the hash values (hash space) corresponding to the hash values which are retrieved out of the keys. Further, in step 9, the address of the chunk 11 is determined and thus the server 2 or server's address which has locally stored the chunk 11 having the hash-space corresponding to the hash values of the hashed keys. In figure 3, it is determined that the chunk 11a has the hash space corresponding to the hash values determined by the hash keys and that the chunk 11a is stored at server 2c. Therefore, server 2c is selected and the service request 1 is sent 10 to server 2c.

In a preferred embodiment, one or more chunks 11 are stored at the one or more servers 2, wherein each chunk 11 comprises state information for a group of users.

Preferably, a particular server 2 stores amongst other chunks 11 a particular, e.g. chunk 11 a in figure 3 which comprises the state information for a particular group of users (or for a particular group of sessions). This means, the state information for a particular service request 1 is stored in only one chunk 11, in this example chunk 11a.

However, in preferred embodiments, the same state information is stored redundantly. This means, one or more chunks 11 of said chunks 11, which are stored at a first server 2 of the plurality of servers 2, are stored redundantly at one or more second servers 2 different from said first server 2. In this case, a particular chunk 11 has two address spaces, one (first) address space at a primary server 2 (first/primary server 2) and one (second) address space at a redundant server 2 (second/redundant server 2). If the selected primary server 2 fails, a reserve address for a redundant server 2 is determined and the service request 1 is sent to the redundant server 2.

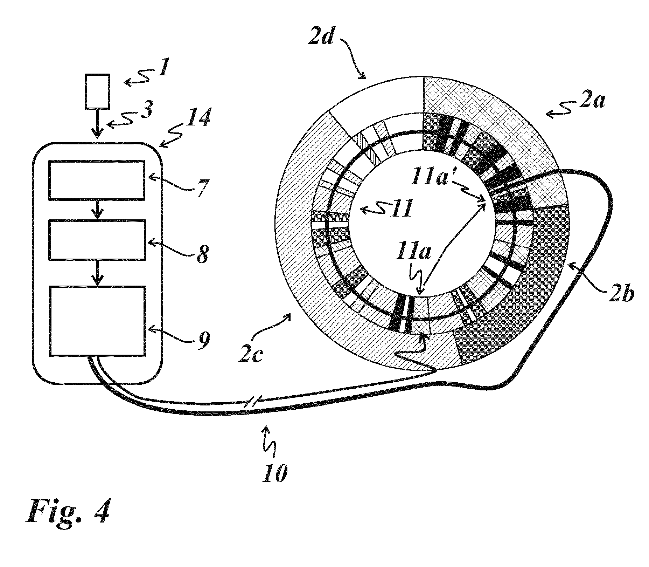

Figure 4 shows an exemplary redundancy concept by using a "reserve" address for each chunk to address the location of a replica of the state information. Figure 4 is based on the implementation shown in figure 3. Therefore the description of elements described with reference to figure 3 is partially omitted. Taking again a short look at figure 3, in figure 3, the server 2c has been selected, because server 2c comprises chunk 11a. The address of chunk 11a was at server 2c which has been selected and the service request 1 was sent 10 to server 2c. Now, in figure 4, chunk 11a has a primary address at server 2c and a second address at server 2a, where the replica 11 a' of chunk 11 a is stored. This means chunk 11 is stored redundantly at server 2a. If the service request 1 is received, firstly the primary address of chunk 11a is determined.

However, it is determined that the primary address of chunk 11a has become stale, this means not valid any more or might not be used anymore (e.g. server 2c failed or is overloaded). Therefore, the reserve address corresponding to chunk 11 is determined, this means the address of replica 11 a' of chunk 11 a is determined. Therefore, a reserve route is selected, namely to the server where the replica 11a' is stored. Here, it is determined that server 2a stores the replica 11 a'. Therefore the reserve route to the server 2a is selected and the service request 1 is sent 10 to server 2a.

In a preferred embodiment, for determining where the replica 11a' is stored, the (virtual) address of replica 11a' is determined and then based on the address of replica 11a' it is determined the address of the server 2a where replica 11a' is stored. This applies in particular, if the storage capacity of the servers 2 is not same for each server 2, but differs very much amongst the servers 2.

In a preferred embodiment, for determining where the replica 11a' is stored, the address of the server 2 is determined, which stores replicas for chunks 11 stored primarily at the failed server 2, and then in a further step, the address of replica 11a' is determined within the server 2 at which replica 11a' is stored. This applies in particular, if the storage capacity of the servers 2 is equal.

In a preferred embodiment, what has described with reference to particular chunk 11a applies for each of the chunks 11 in figure 4. This means, each of chunks 11 is stored at a first address space at a first server 2 and redundantly at a second address space at a second server 2 different from the first server 2.

In a preferred embodiment, one or more of the chunks 11 are re-allocated from a first server 2 to a second server 2 of the plurality of servers 2. In a preferred embodiment, the one or more chunks 11 have been stored at the first server 2 before being re-allocated and are stored at the second server 2 after being re-allocated. This applies in particular in case all chunks 11 stored at a particular first server 2 are growing and therefore become too big. Therefore, for example one of said chunks 11 is re-allocated to a second server 2

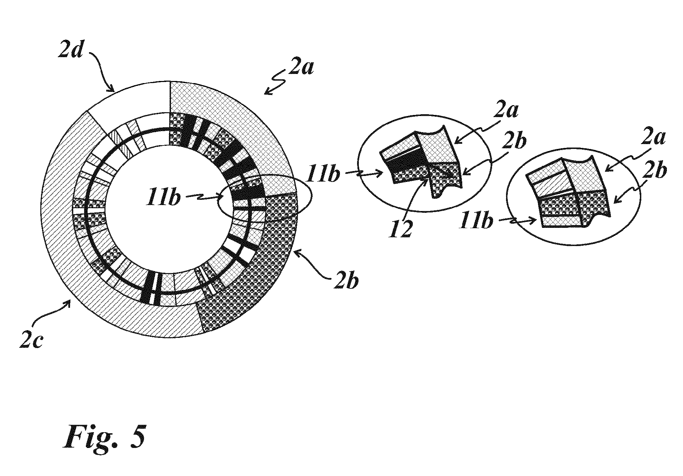

Figure 5 shows an example of a chunk 11 b which is re-allocated 12 from a first server 2a to a second server 2b. Chunk 11 b has been stored at a first server 2, namely at server 2a before being re-allocated 12 (see the left zoomed picture in figure 5). After being re-allocated 12 chunk 11b is stored at a second server 2, namely at server 2b (see the right zoomed picture in figure 5).

The above and the following embodiments are described with reference of a (one) chunk 11, but might apply analogously to more than one chunk 11.

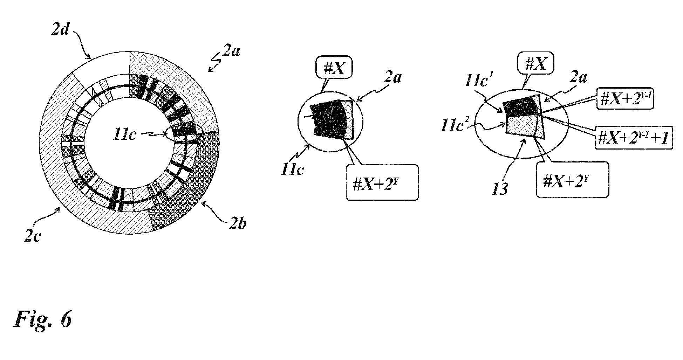

Figure 6 depicts an embodiment of a chunk 11 c which is split 13 into two portions which become two new chunks 11c¹ and 11c². In more detail, a chunk 11 c stored at a particular server 2, here 2a, in particular if said chunk 11c becomes too big, is split 13 in a first portion of said chunk 11c and in a second portion of said chunk 11c, wherein the first portion becomes a first new chunk 11c¹ and is stored at said particular server 2a and the second portion becomes a second new chunk 11c² and is stored at said particular server 2a.

For example, the chunk 11c is stored at a particular server 2a, and preferably, it is determined that the chunk 11c becomes too big or in other words has become too big, thus is now too big. A chunk 11, e.g. chunk 11c, becomes too big, for example because the amount of state information stored at chunk 11c or the number of service requests 1 for which state information is stored at chunk 11c has become too much and it is preferred to keep the amount of state information stored at a particular chunk 11 low for load balancing reasons or the keep the load of service requests for which state information is stored at the one or more chunks almost equal amongst the one or more chunks 11 stored at a server 2 for load balancing reasons.

Therefore, chunk 11c is split 13 into two new chunks, namely a first new chunk 11c¹ and a second new chunk 11c². This is done by splitting 13 chunk 11 c into a first portion and into a second portion. The first portion of chunk 11c becomes the first new chunk 11c¹ and the second portion of chunk 11c becomes the second new chunk 11c². The first new chunk 11c¹ and the second new chunk 11c² are stored at the same server 2a, where the chunk 11c has been stored before being split, in figure 6 at server 2a.

For example, chunk 11c (before being split) has hash space from # X to # X + 2^{y}. For exemplary reasons, the hash space of chunk 11c is divided by two, this means into two halves. Thus, chunk 11c having space from # X to # X + 2^{y} is divided into a first portion having hash space from # X to # X + 2^{y-1} and into a second portion having hash space from # X + 2^{y-1} + 1 to # X + 2^{y}. Accordingly, the first new chunk 11c¹ has hash space from # X to # X + 2^{y-1} and the second new chunk 11c² has hash space from # X + 2^{y-1} + 1 to # X + 2^{y}.

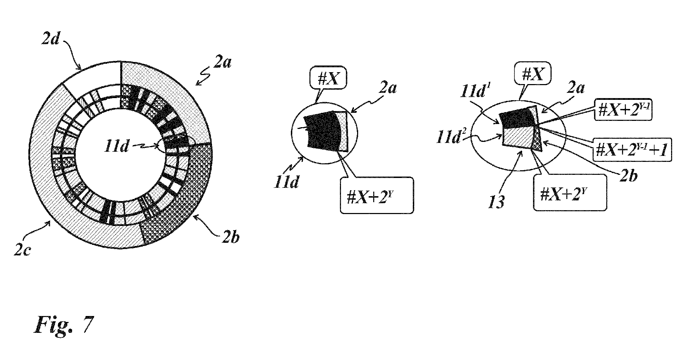

In preferred embodiments described with reference to figure 7, if one of the one or more chunks 11 has become too big, a part of said chunk 11 is split 13 from said chunk 11, and said part is stored as a new chunk 11 at a server 2 different from the server 2 where the chunk 11 that has become too big before being split is stored.

Figure 7 depicts an embodiment of a chunk 11 d which is stored at server 2a. For illustrative reasons the chunk begins at hash value # X and ends at hash value # X + 2^{y}. The value # X + 2^{y} has been chosen for illustrative reasons, because so the hash space can easily be divided by two into two halves. In further embodiments, the chunk might be divided into further partitions. The chunk 11 d is divided in particular, if the chunk 11 d becomes too big.

In particular, the chunk 11d becomes too big is to be understood in regard of load of service requests 1 which must be handled by the server 2 storing the chunk 11 d.

In the embodiment, depicted in figure 7, the chunk 11d is divided 13 into two halves, namely 11d¹ and 11d². The first half, i.e. chunk 11d¹ has hash space from # X to # X + 2^{y-1} which indicates that the hash space of chunk 11 d has been divided by two (note: # X + 2^{y-1} means # X + 2^{y} * 2⁻¹ means # X + 2^{y} / 2) and the second half, i.e. chunk 11d² has the hash space from # X + 2^{y-1} + 1 to # X + 2^{y}. Chunk 11d¹ is stored at server 2a (such as chunk 11 d before being split), and chunk 11d² is stored at server 2b (see left zoomed picture at figure 7).

The embodiment as depicted in figure 7 can also be described with a different terminology having same technical meaning. Chunk 11 d stored at server 2a becomes too big. A part of chunk 11d is split from chunk 11d. The part which is split from chunk 11d is a new chunk 11d², while the remaining part of chunk 11d becomes chunk 11d¹. Chunk 11d before being split had hash space from #X to # X + 2^{y} and had been stored at server 2a before splitting. After the part is split of chunk 11 d, the remaining part of chunk 11 is still stored at server 2a and the remaining part might be termed chunk 11d¹. The remaining part of chunk 11 d, i.e. chunk 11d¹ has hash space from #X to # X + 2^{y-1} at server 2a and the part split of chunk 11d becomes chunk 11d² and is stored at server 2b and has hash space # X + 2^{y-1} + 1 to # X + 2^{y}.

What has described in the context of one chunk 11d applies analogously to two or more chunks 11 which might be split as described in context of chunk 11d.

Figures 5, 6 and 7 show how the distribution of state information in chunks is scaled: by moving (gently grown) chunks 11 from one server 2 to another (figure 5), and by splitting a chunk 11 (figures 6 and 7) that has become too big (it is in such embodiments important that the number of users (or the users activity!) in a chunk 11 and the number of chunks 11 assigned to a server 2 is balanced to allow efficient distribution of replicas and to profit from statistical effects in load balancing.

In a preferred embodiment, the present invention is implemented by a front end distributor (FED) 14 used for distribution of service requests 1 to a plurality of servers 2. The front end distributor 14 is adapted to receive a service request 1, retrieve out of the service request 1 data relevant for selecting a server 2, where a state of the service is already local, to select the server 2 based on the data retrieved out of the service request 1 and to send the service request 1 to the selected server 2.

In a preferred embodiment, the present invention is further implemented by a system 15 for processing service requests 1. The system 15 comprises a plurality of servers 2 and a front end distributor 14, wherein one or more of the servers 2 locally store one or more chunks 11, wherein each chunk 11 comprises state information for a group of users, one or more of the servers 2 of the plurality of servers 2 being adapted to receive a service request 1 from the front end distributor 14 and to execute the service request 1 by means of the locally stored chunk information.

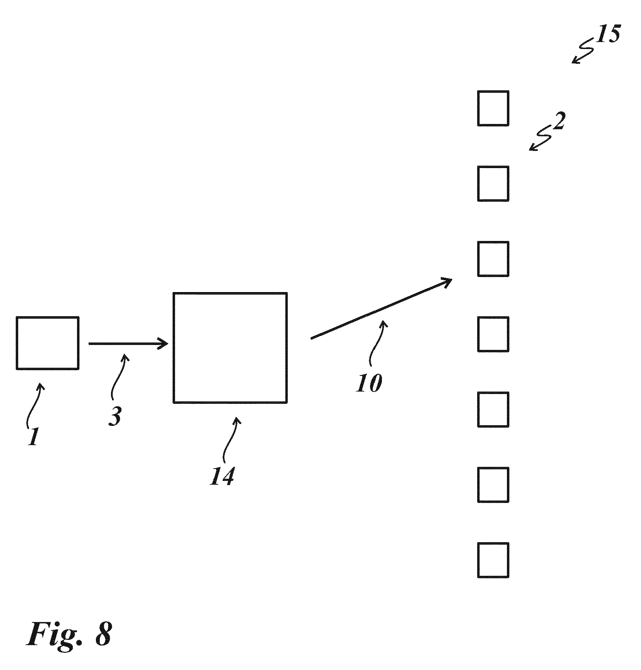

Figure 8 shows an example of system 15 comprising a plurality of servers 2 and a front end distributor 14. The front end distributor 14 receives a service request 1 and implements one or more of the steps as of the described method of distributing service requests 1, which are detailed with reference to the above figures). The front end distributor 14 finally sends the service request 1 to a server 2 which executes the service request 1 based on the state information stored at the server 2. E.g. if the selected server 2 implements the S-PSCF function, the server 2 processes the identification of a user to which the service will be connected.

The present invention might be implemented by the use of hardware, software or combination thereof.

In preferred embodiments, the front end distributor 14 comprises a control unit adapted to execute steps of the method for distributing service requests 1, in particular the steps as described throughout this invention as being implemented by the front end distributor 14.

The control unit may be implemented as a single unit, a stand-alone device, or within a database, integrated in a computer and/or within a computer network. The control unit may be implemented through the use of hardware, software and/or hardware capable of executing software in association with appropriate software.

More specifically, the control unit can be comprised or implemented by circuit-based processes, including possible implementation as a single integrated circuit, such as an ASIC (= Application Specific Integrated Circuit) or such as an FPGA (= Field Programmable Gate Array), a multi-chip module, a single card, or a multi-card circuit pack. The functions of control unit may be implemented as processing blocks in a software program. Such software may be employed in a digital signal processor, micro-controller, or general-purpose computer implemented as a single device or integrated in a computer network.

The control unit may comprise program code embodied in tangible media, such as magnetic recording media, optical recording media, solid state memory, floppy diskettes, CD-ROMs, hard drives, or any other machine-readable storage medium, wherein, when the program code is loaded into and executed in the control unit, the control unit becomes an apparatus used for practicing the invention.

The invention has the advantage to provide a load-distribution mechanism that delivers the service request with a high probability to a resource, namely a server, where the state is already local. The process of mapping the request, in particular in the sense of processing and sending the service request to the appropriate server, is much more lightweight in terms of algorithmic complexity than parsing the complete request message and varying number of workers.

This invention brings together benefits of stateless workers (especially with respect of resource usage) and stateful operation (especially with respect to responsiveness), which are contradictional up to now. Using machine learning techniques offers the possibility to provide FEDs which are protocol agnostic and 'trained' instead of parameterized or coded.

Therefore several virtualized products can use the same type of FED. Avoiding look-ups of the state from a remote side in case of an IMS S-CSCF speeds up the processing time of a message by a factor of 10.

## Claims

1. A method for distribution of service requests (1) to a plurality of servers (2), the method comprising:
- receiving (3) a service request (1);
- retrieving out of the service request (1) data relevant for selecting out of the one or more servers (2) a server (2), where a state of the service is already local;
- selecting the server (2) based on the data retrieved out of the service request (1);
- sending (10) the service request (1) to the selected server (2).

2. The method according to claim 1, wherein the step of selecting the server (2) comprises:
- executing based on one or more of the retrieved data a probability calculation to determine one or more of the servers (2) where the state is already local with a high probability; and
- selecting the server (2) based on said probability calculation.

3. The method according to claim 1, wherein the step of retrieving out of the service request (1) data relevant for selecting the server (2) comprises one or more of:
- extracting (4), out of the service request (1), predetermined features;
- categorizing (5) the extracted features; and
- filtering (6) the categorized features.

4. The method according to claim 1, wherein the step of selecting the server comprises one or more of:
- determining (7) one or more hash values out of the filtered features;
- mapping (8) one or more of the one or more determined hash values to a chunk (11); and
- determining (9) an address of the server (2) based on said chunk.

5. The method according to claim 1, wherein retrieving out of the service request (1) data relevant for selecting the server (2) and selecting the server (2) based on the data retrieved out of the service request (1) comprises:
- determining a feature vector; and
- processing out of the feature vector using support vector machines a solution vector from which the address of the server can be derived.

6. The method according to claim 1, wherein retrieving out of the service request (1) data relevant for selecting the server (2) comprises:
- scanning the service request (1) by tree based self learning techniques.

7. The method according to claim 1, wherein retrieving out of the service request (1) data relevant for selecting the server (2) comprises:
- determining a protocol used for the service request (1); and
- parsing the service request (1) based on a knowledge of the used protocol.

8. The method according to claim 1, further comprising:
- storing one or more chunks (11) at the one or more servers (2), wherein each chunk (11) comprises state information for a group of users.

9. The method according to claim 8, further comprising:
- re-allocating (12) one or more of the chunks (11) from a first server (2) to a second server (2) of the plurality of servers (2).

10. The method according to claim 8, wherein, if one of the one or more chunks (11) has become to big, a part of said chunk (11) is split (13) from said chunk (11), and said part is stored as a new chunk (11) at a server (2) different from the server (2) where the chunk (11) that has become too big before being split is stored.

11. The method according to claim 8, wherein one or more chunks (11) of said chunks (11), which are stored at a first server (2) of the plurality of servers (2), are stored redundantly at one or more second servers (2) different from said first server (2).

12. The method according to claim 1, the method further comprising:
if the selected server (2) fails:
- determining a reserve address for a redundant server (2);
- sending (10) the service request (1) to the redundant server (2).

13. A front end distributor (14) used for distribution of service requests (1) to a plurality of servers (2), the front end distributor (14) adapted to:
- receive (3) a service request (1);
- retrieve out of the service request (1) data relevant for selecting a server (2), where a state of the service is already local;
- select the server (2) based on the data retrieved out of the service request (1); and
- send (10) the service request (1) to the selected server (2).

14. A system (15) for processing service requests (1), the system (15) comprising a plurality of servers (2) and a front end distributor (14), wherein one or more of the servers (2) locally store one or more chunks (11), wherein each chunk (11) comprises state information for a group of users, one or more of the servers (2) of the plurality of servers (2) being adapted to
- receive a service request (1) from the front end distributor (14); and to
- execute the service request (1) by means of the locally stored chunk information.

15. A software product, adapted to execute the method according to claims 1 to 12, when executed on a computer.
